# EUROPÄISCHE PATENTSCHRIFT

(11) **EP 2 097 727 B1**
(45) Veröffentlichungstag und Bekanntmachung des Hinweises auf die Patenterteilung: **29.02.2012**
(21) Anmeldenummer: 07847370.9
(22) Anmeldetag: 27.11.2007
(51) Int. Cl.: G01L 7/08

(54) **VERFAHREN ZUR PRÄGUNG EINER TRENNMEMBRAN EINES DRUCKMITTLERS**
METHOD FOR EMBOSSING A SEPARATING MEMBRANE OF A PRESSURE TRANSMITTER
PROCÉDÉ DE MATRIÇAGE DE LA MEMBRANE DE SÉPARATION D'UN TRANSMETTEUR DE PRESSION

(30) Priorität: 29.11.2006 DE 102006056592
(43) Veröffentlichungstag der Anmeldung: 09.09.2009
(73) Patentinhaber: Endress+Hauser GmbH+Co. KG, 79689 Maulburg (DE)
(72) Erfinder: DANNHAUER, Wolfgang, 06792 Sandersdorf (DE); GETMAN, Igor, 79539 Lörrach (DE); NOTACKER, Harri, 14548 Caputh (DE)
(74) Vertreter: Andres, Angelika Maria
(86) Internationale Anmeldenummer: PCT/EP2007/062843
(87) Internationale Veröffentlichungsnummer: WO 2008/065094

(56) Entgegenhaltungen:
- DE-A1- 10 031 120
- DE-A1- 10 152 681
- DE-A1- 10 162 044
- US-A- 5 495 768

## Beschreibung

Die Erfindung betrifft ein Verfahren zur Prägung einer Trennmembran eines Druckmittlers.

Druckmittler werden in der industriellen Druckmesstechnik zur Übertragung von Drücken eingesetzt. Druckmittler weisen in der Regel einen Membranträger auf, auf den die Trennmembran mit deren äußerem Rand aufgeschweißt ist. Eine zwischen der Trennmembran und dem Membranbett eingeschlossene Druckempfangskammer ist mit einer Druck übertragenden Flüssigkeit gefüllt, die dazu dient, einen von außen auf die Trennmembran einwirkende Druck z.B. über eine an die Druckempfangskammer angeschlossene Druckübertragungsleitung an einen anderen Ort zu übertragen.

Eine typische Anwendung für derartige Druckmittler sind Druckmessaufnehmer. Druckmessaufnehmer werden in nahezu allen Industriezweigen zum Messen von Drücken eingesetzt. Die gemessen Druckwerte werden z.B. zum Steuern, Regeln und/oder Überwachen eines industriellen Herstellungs- und/oder Verarbeitungsprozesses eingesetzt.

In der Druckmesstechnik werden gerne so genannte Halbleiter-Sensoren, z.B. Silizium-Chips mit eindotierten Widerstandselementen, als druckempfindliche Elemente eingesetzt. Üblicherweise weist ein solcher Drucksensor einen membran-förmigen Drucksensor-Chip auf, der in einer Druckmesskammer auf einem Grundkörper aufgebracht ist. Drucksensoren sind in der Regel sehr empfindlich und werden deshalb nicht direkt einem Medium ausgesetzt, dessen Druck aufgenommen werden soll. Stattdessen ist ein mit einer Flüssigkeit gefüllter Druckmittler mit einer äußeren Trennmembran vorgeschaltet. Im Betrieb wird der zu messende Druck an die Trennmembran angelegt und über den Druckmittler in die Druckmesskammer übertragen. Das gilt sowohl für die Messung von absoluten Drücken, als auch für die Messung von Relativdrücken und Differenzdrücken.

Um ein möglichst lineares und hysteresefreies Druckübertragungsverhalten zu erzielen ist die Trennmembran vorzugsweise wellenförmig ausgebildet.

Das im Membranträger integrierte Membranbett bildet einen Überlastschutz für die Trennmembran. Eine Überlast bezeichnet ein Einwirken eines Druckes auf die Trennmembran, der den Messbereich, für den der Druckmessaufnehmer ausgelegt ist, bzw. den Druckbereich für den der Druckmittler ausgelegt ist, überschreitet. Hierbei ist es besonders wichtig, dass das Membranbett und die Trennmembran möglichst formgleich sind, so das sich die Trennmembran im Falle einer Überlast gleichmäßig an das formgleiche Membranbett anschmiegt und eine gleichmäßige Abstützung erfährt. Hierdurch wird die Trennmembran im Überlastfall vor Beschädigungen und/oder bleibenden Verformungen geschützt.

Die Formgebung der Trennmembran erfolgt heute üblicherweise durch Prägeverfahren.

Dabei wird beispielsweise eine ebene Trennmembranronde mittels eines Metallstempels, mittels eines elastischen Prägekissens oder durch hydromatische oder pneumatische Prägeverfahren geprägt und anschließend auf den Membranträger aufgeschweißt. Abschließend wird der Druckmittler dann mit der Druck übertragenden Flüssigkeit befüllt.

Dieses Verfahren bietet den Vorteil, dass die Trennmembranen vorgefertigt werden können, wobei sie beispielsweise in einem Arbeitsgang ausgeschnitten und geprägt werden. Es weist den Nachteil auf, dass beim Aufschweißen der Trennmembran auf den Membranträger eventuell auftretende Schweißspannungen sowie Verwürfe der Trennmembran bestehen bleiben. Diese beeinträchtigen die Druckübertragungseigenschaften des Druckmittlers.
Insb. wirken sie sich nachteilig auf die Linearität aus und können eine Hysterese bewirken.
Außerdem werden bei diesem Verfahren sehr hohe Anforderungen an die Fertigungstoleranzen für die einzelnen Bauteile gestellt, um zu erreichen, dass die Trennmembran und deren Membranbett möglichst formgleich sind. Jede noch so geringe Abweichung in der Formgebung kann im Überlastfall zu einer bleibenden Verformung oder sogar zu einer Beschädigung der Trennmembran führen und wirkt sich damit nachteilig auf die Genauigkeit und die Reproduzierbarkeit der Druckübertragung aus. Dies wirkt sich dann unmittelbar auf die Messgenauigkeit eines mit dem Druckmittler ausgestatteten Druckmessaufnehmers aus.
Alternativ zu dem vorgenannten Verfahren kann die Trennmembranronde erst auf den Membranträger aufgeschweißt werden und anschließend am Membranbett abgeprägt werden. Diese Abprägung kann beispielsweise hydraulisch, pneumatisch oder mittels eines Prägekissens geschehen. Abschließend wird der Druckmittler mit der Druck übertragenden Flüssigkeit gefüllt.
Dies bietet den Vorteil, dass Fertigungstoleranzen bei der Formgebung des Membranbetts durch das Abprägen in die Formgebung der Trennmembran übernommen werden, und dass Schweißspannungen sowie Verwürfe der Trennmembran durch den Prägevorgang zumindest teilweise ausgeglichen werden können. Außerdem erfährt die Trennmembran beim Abprägen ähnliche mechanische Belastungen wie bei einem später eventuell auftretenden Überlastfall.
US-Patent Nr. 5,495,768 offenbart einen Druckmittler mit einer Trennmembran, wobei zur Herstellung der Trennmembran zunächst eine Membranronde an einen Trägerkörper mittels Hartlöten fixiert wird. Anschließend wird die Membranronde durch Druckbeaufschlagung auf einem gewellten Membranbett abgeprägt. Darauf erfolgt die Befüllung des Hohlraums der Druckempfangskammer zwischen dem Membranbett und der Trennmembran mit einer inkompressiblen Übertragungsflüssigkeit.
Bei den vorgenannten Prägeverfahren ist die Formgebung der Trennmembran abhängig von der physikalischen Beschaffenheit des vor und während der Prägung zwischen der Trennmembran und dem Membranbett eingeschlossenen Mediums. Sowohl in dem Zwischenraum eingeschlossene Trennmembran eines Druckmittlers, der einen Membranträger mit einem Membranbett aufweist, bei dem

- eine ebene Trennmembranronde auf den Membranträger geschweißt wird,

- eine von der aufgeschweißten Trennmembranronde und dem

Membranträger eingeschlossene Druckempfangskammer mit einem

Gleitmittel befüllt wird, und

- aus der Trennmembranronde die Trennmembran erzeugt wird, indem die

Trenmmembranronde im Membranbett abgeprägt wird, während sich

Gleitmittel in der Druckempfangskammer befindet.

Gemäß einer bevorzugten Ausgestaltung ist das Gleitmittel eine Druck übertragende Flüssigkeit.

Gemäß einer weiteren Ausgestaltung wird nach dem Aufschweißen der Trennmembranronde die Dichtheit der Schweißverbindung überprüft.

Gemäß einer weiteren Ausgestaltung wird die Druckempfangskammer vor der Befüllung mit dem Gleitmittel evakuiert.

Weiter besteht die Erfindung in einem Verfahren zur Herstellung eines Druckmessaufnehmers mit

- einem in einer Druckmesskammer angeordneten Drucksensor, und

- einem der Druckmesskammer vorgeschalteten mit einer Druck

übertragenden Flüssigkeit gefüllten Druckmittler mit einer auf

einem ein Membranbett aufweisenden Membranträger montierten

Trennmembran,

-- auf deren Außenseite im Messbetrieb ein zu messender Druck einwirkt,

der über die Trennmembran und die Druck übertragende Flüssigkeit in die

Druckmesskammer übertragen wird,

bei dem

- eine ebene Trennmembranronde auf den Membranträger geschweißt wird,

- eine von der aufgeschweißten Trennmembranronde und dem

Membranträger eingeschlossene Druckempfangskammer mit einem

Gleitmittel befüllt wird, und

- aus der Trennmembranronde die Trennmembran erzeugt wird, indem die

Trennmembranronde im Membranbett abgeprägt wird, während sich

Gleitmittel in der Druckempfangskammer befindet.

Weiter besteht die Erfindung in einem Druckmittler mit

- einem ein Membranbett aufweisenden Membranträger und

- einer auf dem Membranträger montierten Trennmembran,

bei dem

- die Trennmembran eine der Form des Membranbetts entsprechende Form

aufweist, die dadurch erzielt wurde, dass

-- eine ebene Trennmembranronde auf den Membranträger geschweißt

wurde,

-- eine von der aufgeschweißten Trennmembranronde und dem

Membranträger eingeschlossene Druckempfangskammer mit einem

Gleitmittel befüllt wurde,

-- die Trennmembranronde im Membranbett abgeprägt wurde, und

-- die Trennmembran nach deren Prägung bezogen auf das Membranbett eine

durch das Gleitmittel bewirkte Gleichgewichtslage einnimmt.

Weiter umfasst die Erfindung einen Druckmittler mit

- einem ein Membranbett aufweisenden Membranträger und

- einer auf dem Membranträger montierten Trennmembran,

bei dem

- die Trennmembran eine der Form des Membranbetts entsprechende Form

aufweist, die dadurch erzielt wurde, dass

-- eine ebene Trennmembranronde auf den Membranträger geschweißt

wurde,

-- eine von der aufgeschweißten Trennmembranronde und dem

Membranträger eingeschlossene Druckempfangskammer mit einem

Gleitmittel befüllt wurde,

-- die Trennmembranronde im Membranbett abgeprägt wurde, und

-- zwischen dem Membranbett und der Trennmembran im

Gleichtgewichtszustand ein Abstand besteht, der durch die Verwendung

des Gleitmittels reduziert ist.

Ebenso umfasst die Erfindung einen Druckmessaufnehmer mit

- einem in einer Druckmesskammer angeordneten Drucksensor, und

- einem der Druckmesskammer vorgeschalteten mit einer Druck

übertragenden Flüssigkeit gefüllten Druckmittler mit einer auf

einem ein Membranbett aufweisenden Membranträger montierten

Trennmembran,

-- auf deren Außenseite im Messbetrieb ein zu messender Druck einwirkt,

der über die Trennmembran und die Druck übertragende Flüssigkeit in die

Druckmesskammer übertragen wird,

bei dem

- die Trennmembran eine der Form des Membranbetts entsprechende Form

aufweist, die dadurch erzielt wurde, dass

-- eine ebene Trennmembranronde auf den Membranträger geschweißt

wurde,

-- eine von der aufgeschweißten Trennmembranronde und dem

Membranträger eingeschlossene Druckempfangskammer mit einem

Gleitmittel befüllt wurde,

-- die Trennmembranronde im Membranbett abgeprägt wurde, und

-- die Trennmembran nach deren Prägung bezogen auf das Membranbett eine

durch das Gleitmittel bewirkte Gleichgewichtslage einnimmt.

Zusätzlich umfasst die Erfindung einen Druckmessaufnehmer mit

- einem in einer Druckmesskammer angeordneten Drucksensor, und

- einem der Druckmesskammer vorgeschalteten mit einer Druck

übertragenden Flüssigkeit gefüllten Druckmittler mit einer auf

einem ein Membranbett aufweisenden Membranträger montierten

Trennmembran,

-- auf deren Außenseite im Messbetrieb ein zu messender Druck einwirkt,

der über die Trennmembran und die Druck übertragende Flüssigkeit in die

Druckmesskammer übertragen wird,

bei dem

- die Trennmembran eine der Form des Membranbetts entsprechende Form

aufweist, die dadurch erzielt wurde, dass

-- eine ebene Trennmembranronde auf den Membranträger geschweißt

wurde,

-- eine von der aufgeschweißten Trennmembranronde und dem

Membranträger eingeschlossene Druckempfangskammer mit einem

Gleitmittel befüllt wurde,

-- die Trennmembranronde im Membranbett abgeprägt wurde, und

-- zwischen dem Membranbett und der Trennmembran im

Gleichtgewichtszustand ein Abstand besteht, der durch die Verwendung

des Gleitmittels reduziert ist.

Fig. 1 zeigt einen Schnitt durch.einen einen-Druckmittler aufweisenden

Druckmessaufnehmer;

Fig. 2 zeigt einen Ausschnitt eines Membranträgers mit einer darauf

aufgeschweißten ebenen Trennmembranronde;

Fig. 3 zeigt einen Verlauf einer ohne Verwendung von Gleitmittel abgeprägten

Trennmembran und deren Membranbett; und

Fig. 4 zeigt einen Verlauf einer unter Verwendung von Gleitmittel abgeprägten

Trennmembran und deren Membranbett.

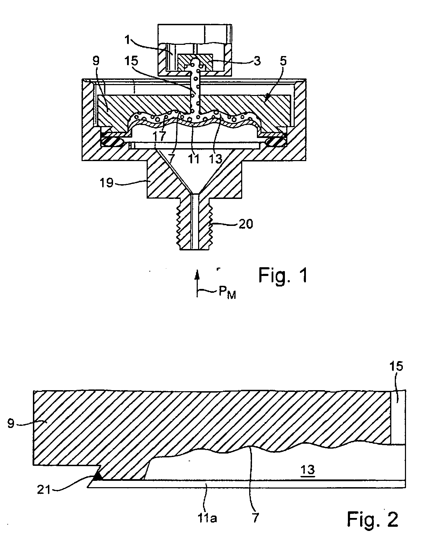

Fig. 1 zeigt einen Schnitt durch einen Druckmessaufnehmer mit einem in einer Druckmesskammer 1 angeordneten Drucksensor 3, z.B. einen Halbleiter-Sensor. Hierzu eignen sich z.B. Silizium-Chips mit eindotierten Widerstandselementen. Bei dem dargestellten Druckmessaufnehmer handelt es sich um einen Absolutdruckmessaufnehmer, wie er beispielsweise in der DE 101 62 044 A1 der Anmelderin beschrieben ist. Entsprechend ist der Drucksensor 3 hier ein Absolutdrucksensor. Die Erfindung ist jedoch nicht auf Absolutdruckmessaufnehmer beschränkt, sondern in analoger Form auch in Relativdruckmessaufnehmern und Differenzdruckmessaufnehmern einsetzbar.

Der Druckmesskammer 1 ist ein Druckmittler 5 vorgeschaltet. Der Druckmittler 5 weist einen ein Membranbett 7 aufweisenden Membranträger 9 auf, auf den eine Trennmembran 11 montiert ist. Trennmembran 11 und Membranbett 7 umschließen eine nach außen abgeschlossene Druckempfangskammer 13, die über eine Druckübertragungsleitung 15 mit der Druckmesskammer 1 verbunden ist.

Der Druckmessaufnehmer weist einen abgeschlossenen Innenraum auf, der in dem dargestellten Ausführungsbeispiel die Innenräume der Druckmesskammer 1 und des Druckmittlers 5 umfasst. Der Innenraum des Druckmittlers 5 setzt sich zusammen aus dem Innenraum der Druckübertragungsleitung 15 und dem Innenraum der Druckempfangskammer 13. Dieser abgeschlossene Innenraum ist mit einer Druck übertragenden Flüssigkeit 17 gefüllt. Die Flüssigkeit 17 ist vorzugsweise eine inkompressible Flüssigkeit mit einem geringen thermischen Ausdehnungskoeffizienten, z.B. ein Silikonöl. Sie dient im Messbetrieb dazu einen außen auf die Trennmembran 11 einwirkenden Druck p_{M} in die Druckmesskammer 1 und damit auf den Drucksensor 3 zu übertragen. Die Zufuhr des Drucks p_{M} erfolgt in dem dargestellten Ausführungsbeispiel über einen Prozessanschluss 19, in den der Druckmittler 5 eingesetzt ist. Der Prozessanschluss 19 weist eine Befestigungsvorrichtung 20, hier ein Außengewinde, auf mit der der Druckmessaufnehmer an einem Messort montierbar ist.

Das Membranbett 7 dient dem Schutz der Trennmembran 11 vor Überlasten. Wirkt auf die Trennmembran 11 ein Druck p_{M} ein, der eine vorgegebene Obergrenze übersteigt, so legt sich die Trennmembran 11 an das Membranbett 7 an und wird hierdurch vor bleibenden Verformungen oder Beschädigungen geschützt. Dabei ist es besonders wichtig, dass die Form der Trennmembran 11 optimal an die Form des Membranbetts 7 angepasst ist. Je genauer die beiden Formen übereinstimmen, umso besser ist der durch das Membranbett 7 erzielbare Schutz.

Zur Erzielung einer optimalen Übereinstimmung wird erfindungsgemäß das nachfolgend beschriebene Verfahren zur Prägung der Trennmembran 11 des Druckmittlers verwendet. Das beschriebene Verfahren ist sowohl für die Herstellung einzelner Druckmittler 5 als auch zur Herstellung vollständiger Druckmessaufnehmer einsetzbar. In einem ersten Verfahrensschritt wird eine ebene Metallscheibe als Trennmembranronde 11a auf den Membranträger 9 geschweißt. Fig. 2 zeigt einen Ausschnitt des Membranträgers 9 mit der darauf aufgeschweißten ebenen Trennmembranronde 11a. Dabei wird ein äußerer Rand der Trennmembranronde 11a durch eine ringförmig umlaufende Schweißnaht 21 mit einer an das Membranbett 7 angrenzenden Stirnfläche des Membranträgers 9 verbunden.

Nach dem Aufschweißen der Trennmembranronde 11a wird vorzugsweise die Dichtheit der Schweißverbindung überprüft. Hierzu eignen sich zum Beispiel in der Druckmesstechnik häufig eingesetzt Prüfverfahren, bei denen der Prüfling, hier der Innenraum des Druckmessaufnehmers bzw. die Druckempfangskammer 13 des Druckmittlers 5 unter Druck mit Helium befüllt wird, und mittels entsprechender Helium-Lecksucher eventuell auftretende Leckagen festgestellt werden.

Danach wird die Druckempfangskammer 13 vorzugsweise evakuiert und die evakuierte Druckempfangskammer 13 mit einem Gleitmittel befüllt. Als Gleitmittel wird vorzugsweise die oben genannte Druck übertragende

Flüssigkeit 17 verwendet. Wird das erfindungsgemäße Verfahren zur Herstellung eines Druckmessaufnehmers verwendet, wird vorzugsweise gleich der gesamte Innenraum des Druckmessaufnehmers evakuiert und mit der Druck übertragenden Flüssigkeit 17 befüllt.

Evakuierung und Befüllung erfolgen, wie bei herkömmlichen Druckmittlern auch, über mindestens einen in den abgeschlossenen Innenraum bzw. in die Druckempfangskammer 13 mündenden Zugang. Dabei ist es bei dem erfindungsgemäßen Verfahren von besonderem Vorteil, dass diese beiden Verfahrensschritte ausgeführt werden, während die Druckempfangskammer 13 noch von der ebenen Trennmembranronde 11a abgeschlossen ist. Dadurch ist die gesamte Druckempfangskammer 13 frei zugänglich und es bestehen insb. keine engen Zwischenräume oder sogar abgetrennte Teilräume in der Druckempfangskammer 13, die die Evakuierung und/oder die Befüllung erschweren. Wäre die Druckempfangskammer 13 während dieser Verfahrensschritte bereits durch eine Trennmembran in deren endgültiger an die Form des Membranbetts 7 angepasster Form abgeschlossen, so würde sich diese Trennmembran unter Vakuum an deren Membranbett anlegen. Dabei besteht die Gefahr, dass sich die Trennmembran nicht überall vollständig an das Membranbett anlegt und insb. im Randbereich enge Zwischenräume und im schlimmsten Fall sogar völlig abgetrennte Teilbereiche in der Druckempfangskammer 13 entstehen, die dann nur unzureichend oder sogar gar nicht evakuiert werden. Dadurch verbleibt Gas in diesen Zwischenräumen oder Teilbereichen, dass nachfolgend auch während der Befüllung in der Druckempfangskammer verbleibt und eine vollständige blasenfreie Befüllung verhindert.

Indem Evakuierung und Befüllung bei mit der ebenen Trennmembranronde 11a abgeschlossenem Druckmessaufnehmer erfolgen ist hierdurch eine sehr hochwertige Evakuierung und eine, insb. im Bereich der Druckempfangskammer 13, praktisch blasenfreie Befüllung erzielbar. Eine blasenfreie Befüllung mit der Druck übertragenden Flüssigkeit 17, insb. im Bereich der Druckempfangskammer 13, führt zu einer erhöhten Vakuumstabilität des auf diese Weise hergestellten Druckmessaufnehmers. Damit ist gemeint, dass der resultierende Druckmessaufnehmer bei einem darauf von außen auf die Trennmembran 11 einwirkenden Unterdruck deutlich genauere Messergebnisse liefert. Gerade bei einem auf die Trennmembran 11 von außen einwirkenden Unterdruck wirken sich unter der Trennmembran 11 eingeschlossene Gasblasen sehr nachteilig aus, da sie sich unter Unterdruck vergrößern und das Übertragungsverhalten der Trennmembran 11 bzw. des gesamten Druckmittlers 5 verändern, was zwangsläufig zu einer Reduzierung der Messgenauigkeit führt.

Ebenso führt die Blasenfreiheit zu einer erhöhten Temperaturstabilität der erzielbaren Messgenauigkeit. Auch Temperaturschwankungen führen zu einer Veränderung der Größe von eingeschlossenen Gasblasen und damit zu einem veränderten Übertragungsverhalten.

Im Anschluss an die Befüllung mit dem Gleitmittel wird aus der Trennmembranronde 11a die Trennmembran 11 erzeugt, indem die Trenmmembranronde 11a im Membranbett 7 abgeprägt wird. Diese Abprägung kann beispielsweise hydraulisch, pneumatisch oder mittels eines Prägekissens geschehen.

Untersuchungen der Anmelderin haben gezeigt, dass der Prägevorgang maßgeblich von der Gleitreibung zwischen der Trennmembran 11 und deren Membranbett 11a beeinflusst wird. Das bedeutet, dass sich die Endform einer unter Verwendung von Gleitmittel geprägten Trennmembran deutlich von deren ohne Gleitmittel erzielbaren Endform unterscheidet. Sie nimmt bezogen auf das Membranbett 9 eine durch das Gleitmittel bewirkte, gegenüber eine Prägung ohne Gleitmittel veränderte, Gleichgewichtslage ein. Diese zeichnet sich insb. durch eine verbesserte Formgebung und durch einen geringen Abstand zwischen Trennmembran 11 und Membranbett 7 aus.

Während des Abprägevorgangs ist die Gleitreibung zwischen der Trennmembranronde 11a bzw. der Trennmembran 11 durch das in der Druckempfangskammer 13 befindliche Gleitmittel deutlich reduziert. Dies bewirkt bei gleichem Prägedruck eine deutlich verbesserte und reproduzierbarere Abprägung der Trennmembran 11. Durch das Gleitmittel werden Einflüsse von Oberflächenunstetigkeiten oder Rauhigkeiten sowohl der Trennmembranronde 11a als auch des Membranbetts 7 auf den Prägevorgang deutlich reduziert. Durch das Gleitmittel gleitet die Trennmembranronde 11a während des Abprägens sehr viel leichter über das Membranbett 7, so dass eine sehr viel höhere Übereinstimmung der Formgebung von Trennmembran 11 und Membranbett 7 erzielbar sind. Außerdem werden die mechanischen Belastungen, denen die Trennmembran 11 während des Prägevorgangs ausgesetzt ist reduziert. Es ist daher aufgrund des Gleitmittels möglich höhere Prägekräfte auf die Trennmembran 11 auszuüben, ohne dass diese reißt oder beschädigt wird.

Fertigungstoleranzen bei der Formgebung des Membranbetts 7 werden durch das Abprägen in die Formgebung der Trennmembran 11 übernommen.

Ebenso werden Schweißspannungen sowie Verwürfe der Trennmembranronde 11a durch den Prägevorgang zumindest teilweise ausgeglichen.

Während bei einem Prägevorgang ohne Gleitmittel schwer kontrollierbare Größen, wie z.B. zwischen Trennmembran und Membranbett eingeschlossene Feuchtigkeit oder Partikel, einen von Prägevorgang zu Prägevorgang möglicherweise stark veränderten Einfluss auf die Endform der Trennmembran haben, liegen bei verschiedenen Prägevorgängen mit Gleitmittel gleich bleibende Herstellungsbedingungen vor. Dies führt zu einer hohen Reproduzierbarkeit. Dies bietet den Vorteil, dass die einzelnen unter Verwendung des Gleitmittels hergestellten Druckmittler bzw. Druckmessaufnehmer nahezu identische Druckübertragungseigenschaften aufweisen. Hierdurch können nachfolgende für die Druckmessung erforderliche Kalibrations- oder Kompensationsverfahren deutlich vereinfacht und die erzielbare Messgenauigkeit verbessert werden.

Die Verwendung des Gleitmittels bewirkt nicht nur gleich bleibende reproduzierbare Herstellungsbedingungen, sondern auch eine deutlich verbesserte Formgebung. Diese durch das erfindungsgemäße Verfahren verbesserte Formgebung wird nachfolgend anhand Ergebnissen einer unter Verwendung der Finite-Elemente Methode ausgeführten Simulation, in der zwei Prägevorgänge simuliert wurden, näher erläutert.

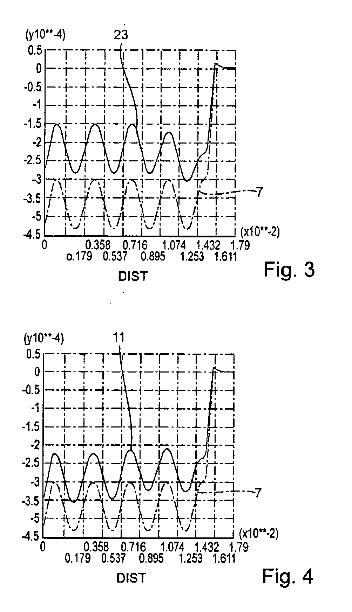

Fig. 3 zeigt den Verlauf des Membranbetts 7 und die Endform einer ohne Gleitmittel geprägten Trennmembran 23. Fig. 4 zeigt den Verlauf des Membranbetts 9 und die Endform einer mit Gleitmittel geprägten Trennmembran 11. Aufgrund der bestehenden Symmetrie sind die Verläufe in beiden Figuren jeweils nur von der Membranbettmitte bzw. der Trennmembranmitte bis zu deren jeweiligem äußeren Rand dargestellt. Die Mitte fällt in der Darstellung mit dem Nullpunkt der x-Achse zusammen. Trennmembran 23, Trennmembran 11 und Membranbett 9 weisen einen Radius von 16 mm auf. Für den Prägevorgang ohne Gleitmittel wurde ein Gleitreibungskoeffizient von µ= 0 angesetzt, für den Prägevorgang mit Gleitmittel ein Gleitreibungskoeffizient von µ= 1. Ein Gleitreibungskoeffizient von µ= 1 liegt beispielsweise vor, wenn als Gleitmittel ein in der Druckmesstechnik für die Druckübertragung übliches Silikonöl verwendet wird. Als Ausgangspunkt wurde für beide Simulationsrechnungen eine ebene auf den Membranträger 9 aufgebrachte Trennmembranronde 11a angesetzt, und es wurden in beiden Fällen identische Prägevorgänge angesetzt.

Man sieht anhand der Simulation sehr deutlich, dass sich die mit Gleitmittel abgeprägte Trennmembran 11 sehr viel formtreuer an die Form des Membranbetts 7 anpasst, als dies bei der ohne Gleitmittel abgeprägten Trennmembran 23 der Fall ist. Das Gleitmittel bewirkt also eine eindeutige Veränderung der Gleichgewichtslage, die die Trennmembran 11 nach der Prägung einnimmt. Außerdem ist der Abstand zwischen der mit Gleitmittel geprägten Trennmembran 11 und deren Membranbett 7 in dem in Fig. 4 dargestellten Endzustand nach der Prägung sehr viel geringer als der Abstand zwischen der ohne Gleitmittel geprägten Trennmembran 23 und deren Membranbett 7. Bei der ohne Gleitmittel abgeprägten Trennmembran 23 beträgt der Abstand zwischen der Trennmembran 23 und deren Membranbett 7 in der Mitte der Trennmembran 23 160 µm, bei der mit Gleitmittel abgeprägten Trennmembran 11 dagegen nur 82 µm. Dieser deutlich geringere Abstand bietet den Vorteil, dass das Innenvolumen der zugehörigen Druckempfangskammer 13 deutlich geringer ist. Damit ist das für die Füllung der Druckempfangskammer 13 benötigte Flüssigkeitsvolumen der Druck übertragenden Flüssigkeit deutlich geringer. Dies führt zu einer erheblichen Reduzierung der Temperaturabhängigkeit der Druckübertragungseigenschaften und damit zu einer Verbesserung der erzielbaren Messgenauigkeit.

Ein weiterer Vorteil des erfindungsgemäßen Verfahrens besteht darin, dass die Trennmembran 11 beim Abprägen den gleichen mechanischen Belastungen ausgesetzt ist, wie sie auch bei einem später eventuell auftretenden Überlastfall auftreten. Sowohl beim Prägen als auch im Überlastfall befindet sich Flüssigkeit in der Druckempfangskammer 13. Dies führt insb. in Verbindung mit der durch das Gleitmittel optimierten Formgebung der Trennmembran 11 dazu, dass die Trennmembran 11 im Überlastfall optimal geschützt wird und die Trennmembran 11 beim erstmaligen Auftreten eines Überlastfalles keine weiteren durch die Überlast bedingten bleibenden Formveränderungen erfährt.

Demgegenüber kann es bei Trennmembran, die ohne Gleitmittel geprägt wurden, beim erstmaligen auftreten einer Überlast zu bleibenden Formveränderungen kommen, da sich die mechanischen Belastungen beim ersten Überlastfall aufgrund der in der Druckempfangskammer befindlichen Druck übertragenden Flüssigkeit von den beim Prägen ohne Gleitmittel aufgetretenen mechanischen Belastungen unterscheiden. Diese bleibenden Formveränderungen führen zu einer Veränderung des Übertragungsverhaltens und damit zu einer Veränderung der Messgenauigkeit und der Reproduzierbarkeit.

**Tabelle 1**

| | |
|---|---|
| 1 | Druckmesskammer |
| 3 | Drucksensor |
| 5 | Druckmittler |
| 7 | Membranbett |
| 9 | Membranträger |
| 11 | Trennmembran |
| 11a | ebene Trennmembranronde |
| 13 | Druckempfangskammer |
| 15 | Druckübertragungsleitung |
| 17 | Druck übertragende Flüssigkeit |
| 19 | Prozessanschluss |
| 20 | Befestigungsvorrichtung |
| 21 | Schweißnaht |
| 23 | Trennmembran |

## Patentansprüche

1. Verfahren zur Prägung einer Trennmembran (11) eines Druckmittlers (5), der einen Membranträger (9) mit einem Membranbett (7) aufweist, bei dem
eine ebene Trennmembranronde (11a) auf den Membranträger (9) geschweißt wird,
eine von der aufgeschweißten Trennmembranronde (11a) und dem Membranträger (9) eingeschlossene Druckempfangskammer (13) mit einem Gleitmittel befüllt wird, und
aus der Trennmembranronde (11a) die Trennmembran (11) erzeugt wird, indem die Trenmmembranronde (11a) im Membranbett (7) abgeprägt wird, **dadurch gekennzeichnet, dass**
die Trennmembranronde (11a) in dem Membranbett abgeprägt wird, während sich Gleitmittel in der Druckempfangskammer (13) befindet.

2. Verfahren nach Anspruch 1, bei dem das Gleitmittel eine Druck übertragende Flüssigkeit (17) ist.

3. Verfahren nach Anspruch 1, bei dem nach dem Aufschweißen der Trennmembranronde (11a) die Dichtheit der Schweißverbindung (21) überprüft wird.

4. Verfahren nach Anspruch 1, bei dem die Druckempfangskammer (13) vor der Befüllung mit dem Gleitmittel evakuiert wird.

5. Druckmittler (5) mit
einem ein Membranbett (7) aufweisenden Membranträger (9) und
einer auf dem Membranträger (9) montierten Trennmembran (11), bei dem die Trennmembran (11) eine der Form des Membranbetts (7) entsprechende Form aufweist,
**dadurch gekennzeichnet** die Form dadurch erzielt wurde, dass die Trennmembran mit einem Verfahren nach einem der Ansprüche 1 bis 4 geprägt wurde,
wobei die Trennmembran (11) nach deren Prägung bezogen auf das Membranbett (7) eine durch das Gleitmittel bewirkte Gleichgewichtslage einnimmt.

6. Druckmessaufnehmer mit
einem in einer Druckmesskammer (1) angeordneten Drucksensor (3); und
einem der Druckmesskammer (1) vorgeschalteten mit einer Druck übertragenden Flüssigkeit (17) gefüllten Druckmittler (5) gemäß Anspruch 5.

## Claims

1. Procedure for stamping a process isolating diaphragm (11) of a diaphragm seal (5), which has a diaphragm support (9) with a diaphragm bed (7), where
a planar circular blank of the process isolating diaphragm (11a) is welded onto the diaphragm support (9)
a pressure reception chamber (13), enclosed by the welded-on process isolating diaphragm circular blank (11a) and the diaphragm support (9), is filled with an anti-friction agent, and
the process isolating diaphragm (11) is created using the process isolating diaphragm circular blank (11a) by impressing the process isolating diaphragm circular blank (11 a) in the diaphragm bed (7),
**characterized in that**
the process isolating diaphragm circular blank (11 a) is impressed in the diaphragm bed while anti-friction agent is located in the pressure reception chamber (13).

2. Procedure as claimed in Claim 1, wherein the anti-friction agent is a pressure-transmitting liquid (17).

3. Procedure as claimed in Claim 1, wherein the leak-tightness of the welding connection (21) is checked when the process isolating diaphragm circular blank (11a) has been welded on.

4. Procedure as claimed in Claim 1, wherein the pressure reception chamber (13) is evacuated before being filled with the anti-friction agent.

5. Diaphragm seal (5) with
a diaphragm support (9) with a diaphragm bed (7) and
a process isolating diaphragm (11) mounted on the diaphragm support (9), the process isolating diaphragm (11) having a shape that corresponds to the shape of the diaphragm bed (7).
**characterized in that**
the shape was achieved by stamping the process isolating diaphragm in a procedure as described in one of the Claims 1 to 4.
wherein - once stamped - the process isolating diaphragm (11) adopts a state of equilibrium in relation to the diaphragm bed (7), which is brought about by the anti-friction agent.

6. Pressure transmitter with
a pressure sensor (3) arranged in a pressure measuring chamber (1); and
a diaphragm seal (5), which is upstream from the pressure measuring chamber (1) and filled with a pressure-transmitting liquid (17).

## Revendications

1. Procédé destiné à l'estampage d'une membrane de séparation (11) d'un séparateur (5), qui comporte un support de membrane (9) avec un lit de membrane (7), pour lequel
une tôle ronde de membrane de séparation (11a) est soudée sur le support de membrane (9)
une chambre de réception de pression (13), enfermée par la tôle ronde de membrane de séparation (11a) et le support de membrane (9), est remplie avec un lubrifiant, et
la membrane de séparation (11) est générée à partir de la tôle ronde de membrane de séparation (11a), en ce que la tôle ronde de membrane de séparation (11a) est estampée dans le lit de membrane (7),
**caractérisé en ce**
**que** la tôle ronde de membrane de séparation (11a) est estampée pendant que le lubrifiant se trouve dans la chambre de réception de pression (13).

2. Procédé selon la revendication 1, pour lequel le lubrifiant est un liquide (17) transmettant une pression.

3. Procédé selon la revendication 1, pour lequel l'étanchéité de l'assemblage par soudure est contrôlée après le soudage de la tôle ronde de membrane de séparation (11a).

4. Procédé selon la revendication 1, pour lequel la chambre de réception de pression (13) est évacuée avant le remplissage de lubrifiant.

5. Séparateur(5) avec
un support de membrane (9) présentant un lit de membrane (7) et
une membrane de séparation (11) montée sur le support de membrane (9), la membrane de séparation (11) présentant une forme correspondant à la forme du lit de membrane (7).
**caractérisé en ce**
**que** la forme a été obtenue en ce que la membrane de séparation a été estampée à l'aide d'un procédé d'après l'une des revendications 1 à 4,
la membrane de séparation (11) adoptant, après son estampage, une position d'équilibre obtenue par le lubrifiant, par rapport au lit de membrane (7).

6. Transmetteur de pression avec
un capteur de pression (3) disposé dans une chambre de mesure de pression (1) ; et
un séparateur (5) conforme à la revendication 5, rempli d'un liquide (17) transmettant une pression, lequel séparateur est disposé en amont de la chambre de mesure de pression (1).
